Europäisches Patentamt

European Patent Office

Office européen des brevets

(11) Veröffentlichungsnummer: **0 368 827**
**A1**

# EUROPÄISCHE PATENTANMELDUNG

(21) Anmeldenummer: **89850382.6**

(51) Int. Cl.5: **F16M 11/12, G06F 1/00**

(22) Anmeldetag: **06.11.89**

(30) Priorität: **08.11.88 DE 8813958 U**

(43) Veröffentlichungstag der Anmeldung:
**16.05.90 Patentblatt 90/20**

(84) Benannte Vertragsstaaten:
**AT BE CH DE ES FR GB IT LI NL SE**

(71) Anmelder: **STEELFORM AB**
**Box 89**
**S-360 30 Lammhult(SE)**

(72) Erfinder: **Blomqvist, Berthold**
**Falkvägen 1**
**S-360 30 Lammhult(SE)**

(74) Vertreter: **Siebmanns, Hubertus**
**Götalands Patentbyra AB Box 154**
**S-561 22 Huskvarna(SE)**

(54) **Verstellbare Tragvorrichtung fuer Datenterminalen u. dgl.**

(57) Verstellbare Tragvorrichtung für eine Datenterminale mit Tastatur. Die Tragvorrichtungzeigt einen
Schwenkarm (3) mit einer an dessen freiem Ende
angeordneten teilsphärischen, nach oben hin offenen
Lagerschale (7), in der formschlüssig eine Schwenkschale (17) mit einem daran befestigten Tragblech
(19) angeordnet ist. In der Schwenkschale ist unter
anderem eine elastische Druckscheibe gegenüber
dem Lagerarm stationär angeordnet, wobei über
eine Arretierschraube (9), welche die beiden Schalen
durchsetzt, mittels eines Arretierdrehknopfes (10)
eine veränderliche Reibungskraft auf die Schwenkschale ausübbar ist. Unter dem Tragblech (19) ist in
seitlichen Profilen ein Bügel verschiebbar gelagert,
der in verschiedenen Ausziehlagen arretierbar sowie
abkippbar vorgesehen ist.

FIG.7

FIG.2

EP 0 368 827 A1

Vorliegende Erfindung betrifft eine verstellbare Tragvorrichtung für Datenterminalen u.dgl. und ist in der Einleitung von Anspruch 1 näher umrissen.

Die bisher bekannt gewordenen Tragvorrichtungen dieser Art erlauben keine zufriedenstellende Verstellung, insbesondere Schwenkbarkeit in Querrichtung und Längsrichtung, wobei es darauf ankommt, dass eine Verstellung auch von ungeschultem Personal leicht, schnell und einfach ausgeführt werden kann, dass die Tragvorrichtung nach einer Verstellung die eingestellte Lage beibehält und insbesondere die Funktionen der Vorrichtung selbst bei häufigem Verstellen unverändert erhalten bleiben. Auch kommt es darauf an, dass eine solche Vorrichtung leicht, schnell, einfach und preisgünstig herzustellen und zusammenzubauen ist. Ferner soll eine vielseitige Anwendbarkeit vorliegen und höchstmögliche Belastung ohne Funktionsbeinsträchtigung möglich sein. Auch soll die Ausführung nicht-sperrig und auf kleinstem Raume möglich sein und soll Rücksicht genommen werden auf verschiedene ergonometrische Aspekte.

Mit der Verbesserung der vorbekannten Tragvorrichtungen in den genannten Hinsichten als Zielsetzung weist die erfindungsgemässe Tragvorrichtung vornehmlich die im Kennzeichen von Anspruch 1 angegebenen Merkmale auf.

Weitere Merkmale und Vorteile der Erfindung gehen aus folgender Beschreibung unter Hinweis auf die beigefügten Zeichnungen hervor. In diesen sind einige nicht begrenzende Aufführungsbeispiele teilweise schematisch dargestellt. Es zeigen:

Figur 1 eine bevorzugte erfindungsgemässe Tragvorrichtung in Seitenansicht,

Figur 2 eine perspektivische Unteransicht der wesentlichen Teile der Vorrichtung gemäss Figur 1,

Figur 3 eine Unteransicht eines Teiles der Vorrichtung gemäss Figur 1,

Figur 4, eine Ansicht gemäss Schnittlinie IV-IV in Figur 3,

Figur 5 eine Seitenansicht des Teiles emäss Figur 3 zur Verdeutlichung verschiedener Funktionslagen,

Figur 6 eine Draufsicht auf einen Teil der Vorrichtung gemäss Figur 2,

Figur 7 ein Schnittbild gemäss Schnittlinie VII-VII in Figur 6,

Figur 8 eine Draufsicht auf einen Teil der Vorrichtung gemäss Figur 7; und

Figur 9 - 12 verschiedene diametrale Schnitte durch Teile der erfindungsgemässen Tragvorrichtung gemäss Figur 7.

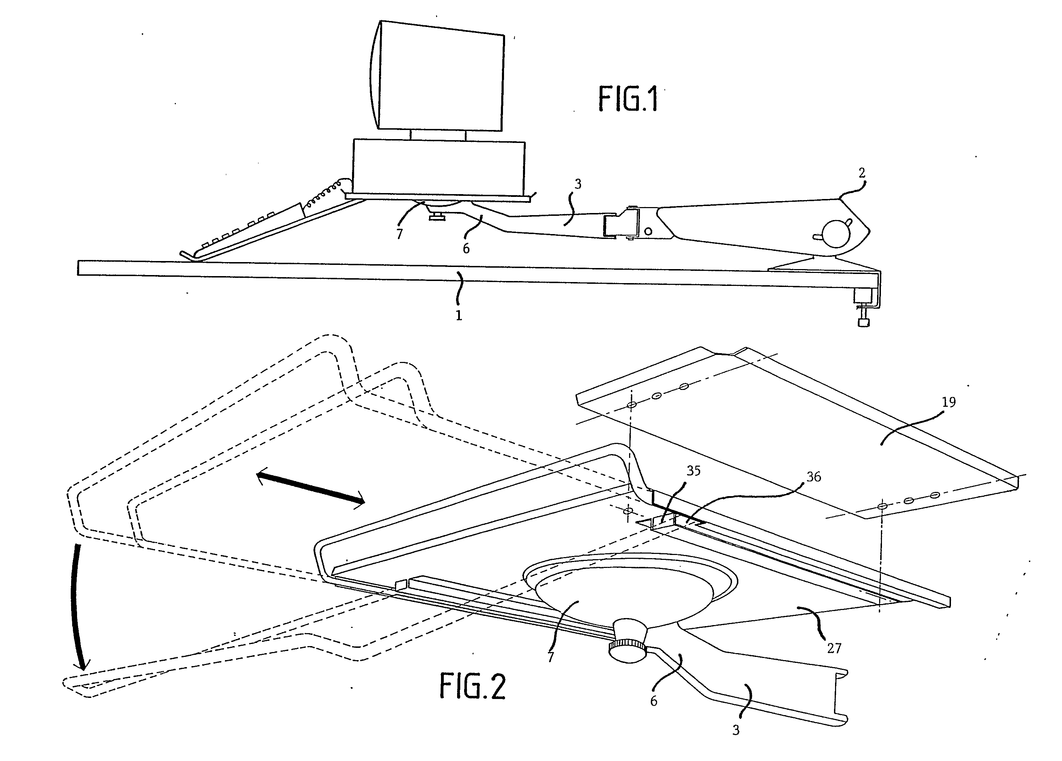

In Figur 1 bezeichnet 1 eine Aufstellfläche, beispielsweise eine Tischplatte, auf der ein Stativ od.dgl. 2 beliebiger Art angebracht ist. An diesem Stativ ist ein Schwenkarm 3 horizontal schwenkbar angelenkt, insbesondere mittels Lageraugen 4, welche miteinander vertikal fluchtende Bohrungen 5 enthalten. Der Schwenkarm ist mit seinem anlenkungsfernen Ende 6 vorzugsweise leicht nach oben abgewinkelt, um schliesslich an seinem freien Ende eine Lagerschale 7 zu tragen, welche teilsphärisch ausgebildet und nach oben offen ist. Die Teile 3-7 sind vorzugsweise einstückig hergestellt, z.B. als Aluminiumguss-stück.

Die Schale 7 zeigt bevorzugt zentrisch eine radial durchgehende nicht-rotationssymmetrische Lagerbohrung 8 zur Aufnahme einer Arretierschraube 9, deren Kopf innerhalb der Schale anzuordnen ist, während das Schraubengewinde den Lagerarm vorzugsweise nach unten überragt und in diesem Bereich mit einem Arretierdrehknopf 10 zusammenwirkt. Dabei ist vorteilhaft die Arretierschraube durch formschlüssige Ausführung mit der Bohrung 8 gegenüber der Schale drehfest angeordnet und ist in eine nach unten offene absatzförmige Erweiterung 11 der Bohrung 8 ein elastischer Ring 12 aus beispielsweise Gummi eingeführt, welcher von einem Ansatz 13 des Drehknopfes 10 beaufschlagt wird, um so eine elastische Zugkraft auf den Kopf der Schraube 9 in Richtung der Lagerschale 7 auszuüben.

In die Lagerschale 7 ist bevorzugt ein unterer Lagerring 14 eingebracht, welcher mit einem oder mehreren unteren Vorsprüngen 15 in eine nicht gezeigte Ausnehmung der Lagerschale eingreift, um so drehfest in dieser angeordnet werden zu können. Der Lagerring 14 umgreift ferner bevorzugt mit einem nach unten abstehenden Ringflansch 16 die Lagerschalenkante, um diese zu schützen und selbst gegen Verschiebungen gesichert angeordnet werden zu können. In den Lagerring 14 ist formschlüssig eine Schwenkschale 17 aus vorzugsweise Metall eingebracht, welche Bohrlöcher od.dgl. 18 besitzt, womit sie auf der Unterseite eines Tragbleches od.dgl. 19 durch nicht gezeigte Schrauben befestigbar ist. Mittig zeigt die Schwenkschale eine bevorzugt rechteckförmige Durchtrittöffnung 20 zum Durchtritt der Arretierschraube 9, welche bevorzugt einen bedeutend geringeren Durchmesser hat als die Breite der Durchtrittsöffnung, deren Länge wiederum bevorzugt bedeutend grösser ist als ihre Breite, so dass die Schraube 9 sowohl in Querrichtung als auch insbesondere in Längsrichtung innerhalb der Durchtrittsöffnung wandern kann.

Die Schwenkschale 17 wird ihrerseits von innen beaufschlagt von einem oberen Lagerring 21 mit einer stumpfkegelförmigen Anlagefläche 22 für den umlaufenden Randbereich 24 einer Druckscheibe 23. Nach oben hin wird der äussere Randbereich des oberen Lagerringes vorzugsweise von einem umlaufenden Wulst 25 abgeschlossen. Auf diese Weise ruht die Druckscheibe 23 sicher in dem oberen Lagerring, ohne gegenüber diesem verschoben werden zu können. Die Druckscheibe 23 besteht vorzugsweise aus Metall und ist derart dünn bemessen das sich bei Querbeanspruchung eine gewisse erwünschte Elastizität geltend macht. Die Druckscheibe besitzt mittig vorzugsweise eine Buchse 26 aus Kunststoff zur Aufnahme der Schraube 9.

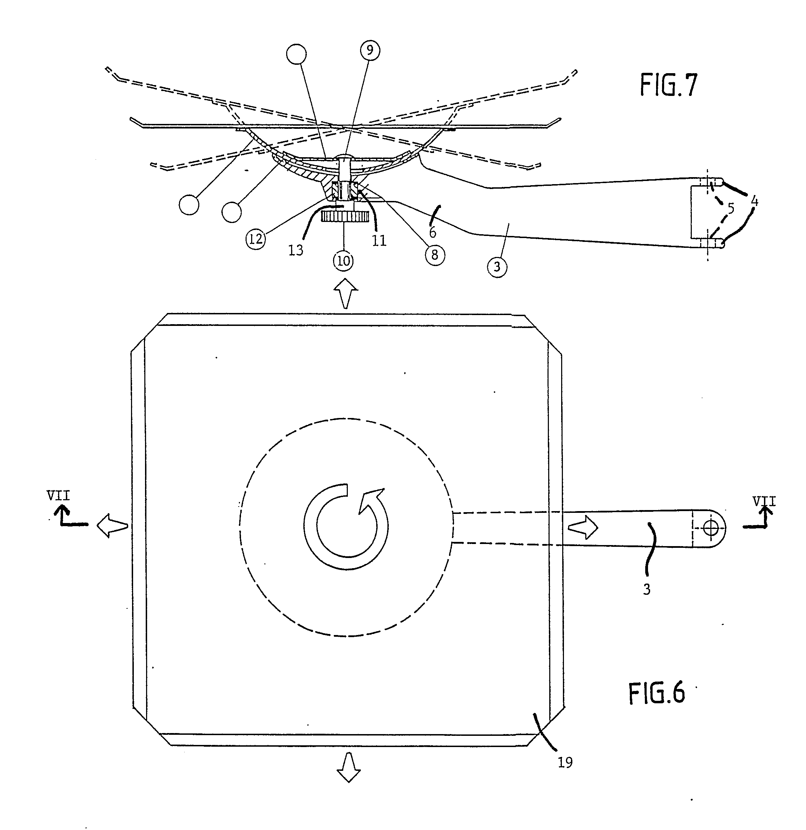

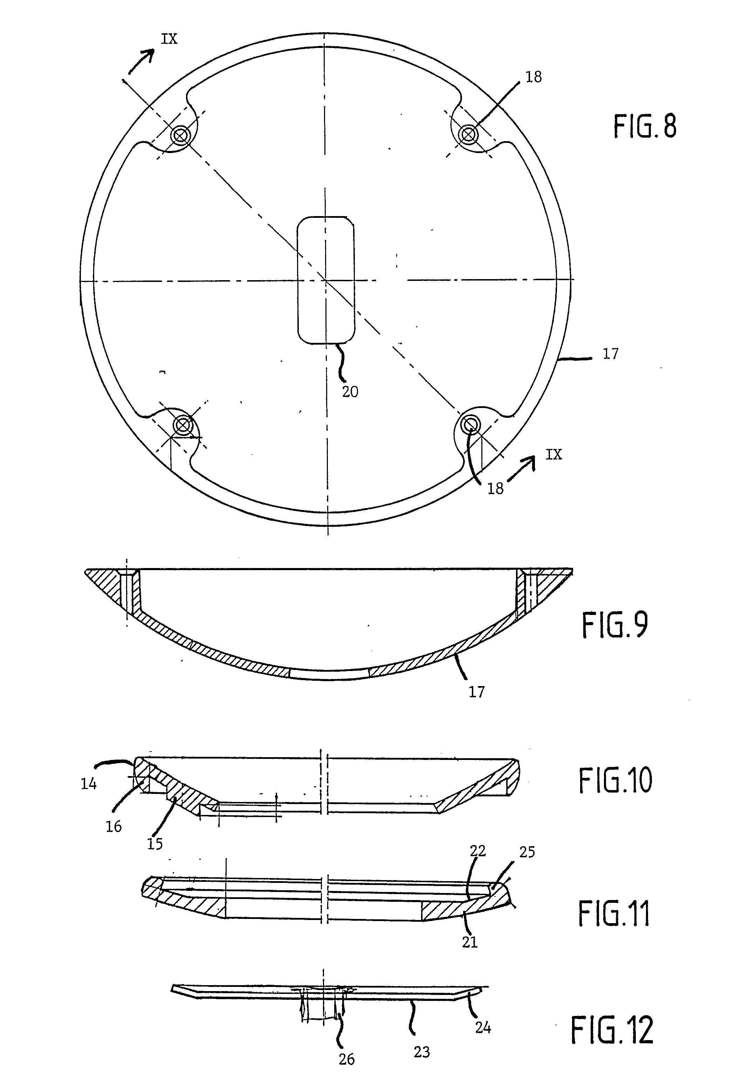

Die Vorrichtung gemäss Figur 6-12 ist in Querrichtung und in Längsrichtung kippbar sowie drehbar, wie dies in Figur 6 und 7 angedeutet ist. Ferner ist eine solche Vorrichtung praktisch unterhaltsfrei, da es aufgrund der gezeigten und beschriebenen Anordnung keiner Schmierung od.dgl. bedarf. Auf diese Weise machen sich vorteilhafte Reibungskräfte geltend, die so abgemessen sind, dass einmal ein leichtes Verstellen möglich ist, anderseits jedoch die gesamte Vorrichtung die eingestellte Lage im Prinzip stets einhält.

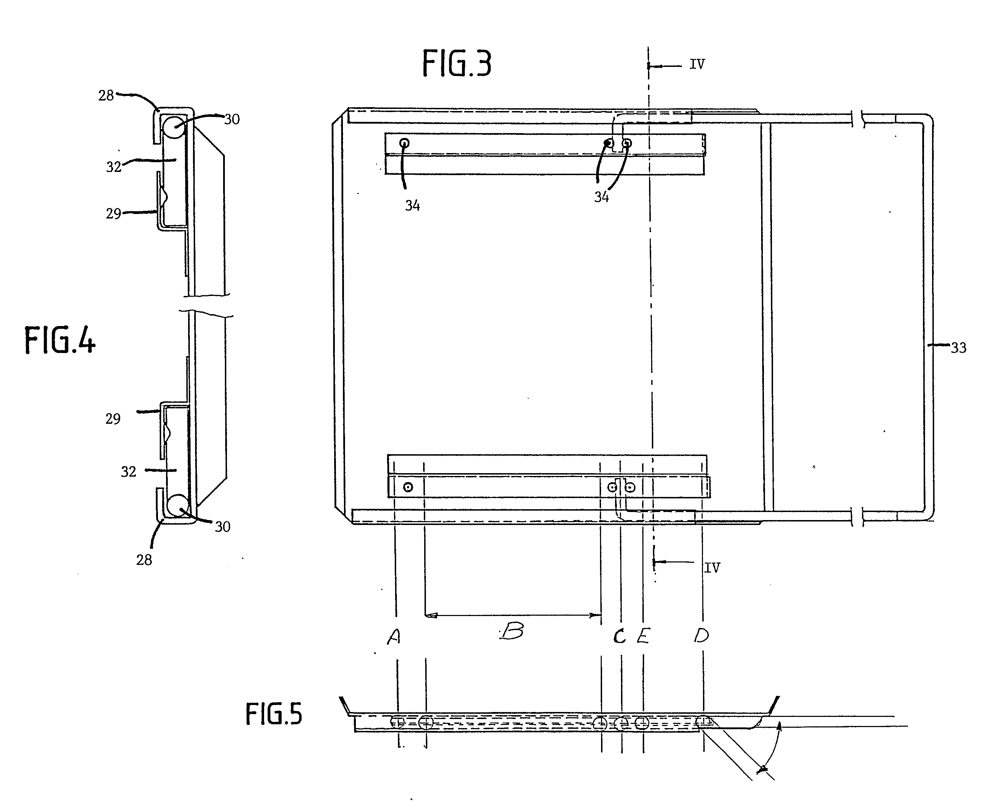

Unter dem Tragblech od.dgl. 19 ist bevorzugt ein weiteres verstellbares Tragvorrichtungsteil angeordnet, wie dies aus Figur 2-5 hervorgeht. Dieser zweite Teil besitzt einen Rumpf 27, welcher dem Tragblech gleicht und unter diesem z.B. flach anliegend angeschraubt ist. In diesem Falle ist natürlich die Schwenkschale 17 am Rumpf befestigt. Die Seitenkanten des Rumpfes sind nach unten und nach innen abgewinkelt zur Bildung von Führungsprofilen 28, denen Halteprofile 29 jeweils nach innen hin etwa spiegelsymmetrisch gegenüberliegen. Diese Halteprofile können Z-förmigen Querschnitt aufweisen und mit einem Schenkel am Rumpf befestigt sein.

Die Profile 28, 29 sind jeweils paarweise zur Aufnahme eines Schenkels 30 eines Bügels 31 vorgesehen, der bevorzugt im wesentlichen U-form hat, wobei die freien Schenkelenden 32 in Richtung gegeneinander abgewinkelt sind, während der Bügelsteg 33 bevorzugt etwas nach oben abgewinkelt von dem Rumpf absteht. Auf der dem Rumpf zugewendeten Seite sind die freien Halteprofilenden mit Anschlägen od.dgl. 34 ausgestattet, wovon wenigstens ein Teil unter Beanspruchung der Federwirkung der freien Halteprofilenden überwindbar ist. So sind die am weitesten vom Bügelsteg entfernten Anschläge vorzugsweise dazu vorgesehen, die freien Schenkelenden in eingeschobener Bügellage zu arretieren. Die dem Bügelsteg am nächsten angeordneten Anschläge sind vorzugsweise jeweils paarweise vorhanden, um eine bestimmte Ausziehlage genau festzulegen, in der beispielsweise eine Tastatur einer Datenterminale sicher festgelegt wird. Schliesslich sind die bügelstegnahen Enden der Halteprofile bevorzugt gegen den Rumpf hin abgebogen zur Bildung von Endanschlägen 35, gleichzeitig wie noch diesem Bereich Ausnehmungen 36 in den freien Schenkeln der Führungsprofile vorgesehen sind, so dass bei entsprechend herausgezogenem Bügel dieser nach unten hin abgekippt werden kann, wie dies links unten in Figur 2 und in Figur 1 veranschaulicht ist. Dabei kann der Bügel entweder auf der Aufstellfläche 1 anliegen oder können am Rumpf od.dgl. besondere, nicht gezeigte Anschläge vorhanden sein, die eine gewisse Kipplage nach unten begrenzen.

Der Bügel 33 und insbesondere dessen Steg 33 sind bevorzugt als Handgriff für die gesamte erfindungsgemässe verstellbare Tragvorrichtung vorgesehen, also auch für die Teile 1-26, so dass es keiner besonderen Handgriffe od.dgl. bedarf um die gewünschten Einstellungen vorzunehmen.

Dank der Erfindung ergibt sich eine Reihe von Vorteilen. So sind die Schwenkschale und alle mit dieser zusammenhängenden Teile in alle Richtungen kippbar, wobei eine vorteilhafte Begrenzung in Querrichtung vorliegt, die nur einem Teil der Begrenzung in Längsrichtung entspricht, wobei unter Längsrichtung in der Regel die Richtung des Schwenkarmes 3 zu verstehen ist. Ferner sind die Schwenkschale und die mit dieser zusammenhängenden Teile vorzugsweise unbegrenzt drehbar angeordnet. Diese Drehbarkeit ist dank der im Vorgehenden beschriebenen und in den Zeichnungen gezeigten Konstruktion von geringeren Reibungskräften gehemmt als die Kippbewegungen, in dem die relativ kleinflächige Reibung zwischen der Schraube 9 und der Druckscheibe 23 mit der relativ grossflächigen Reibung zwischen dem oberen Lagerring 21 und dem unteren Lagerring 14 zu vergleichen ist. Durch den Arretierdrehknopf 10 ist die Grössenordnung dieser vorteilhaften Reibungskräfte leicht einstellbar. In diesem Zusammenhang sei genannt, dass der elastische Ring 12 sich auch durch Scheibenfedern od. dgl. ersetzen lässt. Auch im übrigen sind die verschiedenen Teile natürlich in ihrer Grösse und eventuell Art beliebig wählbar bzw. austauchbar, um die in jedem Falle optimalen Eigenschaften zu besitzen.

Die Erfindung ist nicht auf die gezeigten und/oder beschriebenen Ausführungen begrenzt, sondern lässt sich im Rahmen des Erfindungsgedankens, wie er in den folgenden Ansprüchen zum Ausdruck kommt, beliebig abändern und ergänzen.

## Ansprüche

1. Verstellbare Tragvorrichtung für Datenterminalen u.dgl. mit einem Schwenkarm (3) und einer an dessen freiem Ende angeordneten teilsphärischen, nach oben hin offenen Lagerschale (7), einer in der Lagerschale formschlüssig angeordneten Schwenkschale und einem hieran befestigten Tragblech od.dgl. (19), **dadurch gekennzeichnet**, **dass** die Lagerschale (7) bevorzugt zentrisch eine radial durchgehende Lagerbohrung (8) zur Aufnahme einer Arretierschraube (9) aufweist, deren Kopf innerhalb der Lagerschale angeordnet ist, während das Schraubengewinde den Lagerarm (3) vorzugsweise nach unten überragt und in diesem Bereich mit einem Arretierdrehknopf od.dgl. (10) zusammenwirkt, und dass Mittel (12, 23) vorgesehen sind, um veränderliche Reibungskräfte zwischen äusserst der Lagerschale (7) und dem Tragblech od.dgl. (19) zu erzeugen.

2. Tragvorrichtung nach Anspruch 1, **dadurch gekennzeichnet, dass** die Lagerbohrung (8) nicht-rotationssymmetrisch ausgeführt und die Arretierschraube (9) im Bereich dieser Bohrung gegenüber dieser formschlüssig, insbesondere rechteckförmig ausgeführt ist.

3. Tragvorrichtung nach Anspruch 1, **dadurch gekennzeichnet, dass** die Lagerbohrung (8) auf der Unterseite des Schwenkarmes ( 3) eine nach unten hinoffene absatzförmige Erweiterung (11) aufweist, in die ein elastischer Ring (12) aus beispielsweise Gummi, eine Scheibenfeder od.dgl. eingeführt ist, und dass das so gebildete elastische Element (12) von einem Ansatz (13) des Drehknopfes (10) beaufschlagt ist, um so eine elastische Zugkraft auf den Kopf der Arretierschraube (9) in Richtung der Lagerschale (7) auszuüben.

4. Tragvorrichtung nach Anspruch 1, **dadurch gekennzeichnet, dass** in die Lagerschale (7) ein unterer Lagerring (14) aus insbesondere Kunststoff eingebracht ist, welcher bevorzugt mit einem oder mehreren unteren Vorsprüngen (15) in entsprechende Ausnehmungen der Lagerschale (7) eingreift zwecks drehfester Anordnung in derselben, und dass der Lagerring (14) bevorzugt mit einem nach unten abstehenden Ringflansch (16) die Lagerschalenkante umgreift.

5. Tragvorrichtung nach Anspruch 1, **dadurch gekennzeichnet,** dass die Schwenkschale (17) eine bevorzugt rechteckförmige Durchtrittsöffnung (20) aufweist zum Durchtritt der Arretierschraube (9), welche bevorzugt einen bedeutend geringeren Durchmesser hat als die Breite der Durchtrittsöffnung, deren Länge bevorzugt bedeutend grösser ist als ihre Breite zwecks Erzielung verschiedenartiger begrenzter Kippbarkeit der Schwenkschale in Längsrichtung des Schwenkarmes (3) und quer hierzu.

6. Tragvorrichtung nach Anspruch 1, **dadurch gekennzeichnet, dass** die Schwenkschale (17) von innen beaufschlagt wird von einem oberen Lagerring (21) mit einer vorzugsweise stumpfkegelförmigen Anlagefläche (22) für den umlaufenden, vorzugsweise leicht nach oben abgewinkelten Randbereich (24) einer Druckscheibe (23), und dass der äussere Randbereich des oberen Lagerringes bevorzugt von einem umlaufenden Wulst (25) abgeschlossen ist, und dass die vorzugsweise aus Metall stehende Druckscheibe derart dünn bemessen ist, dass sich bei Querbeanspruchung eine gewisse Elastizität ergibt, und dass ferner die Druckscheibe bevorzugt eine Buchse (26) aus Kunststoff mittig zur Aufnahme der Arretierschraube (9) aufweist.

7. Tragvorrichtung nach Anspruch 1, **dadurch gekennzeichnet, dass** unterhalb des Tragbleches od.dgl. (19) ein weiteres verstellbares Tragvorrichtungteil oder das Tragblech od.dgl. selbst als ein solches ausgeführt ist mit einem Rumpf (27), dessen Seitenkanten nach unten und nach innen abgewinkelt sind zur Bildung von Führungsprofilen (28), denen Halteprofile (29) jeweils nach innen hin etwa spiegelsymmetrisch gegenüberliegen, dass die Halteprofile (29) vorzugsweise Z-förmigen Querschnitt aufweisen und mit einem Schenkel am Rumpf (27) befestigt sind, und dass die Profile (28, 29) jeweils paarweise zur Aufnahme eines Schenkels (30) eines Bügels (31) vorgesehen sind, der bevorzugt im wesentlichen U-form hat.

8. Tragvorrichtung nach Anspruch 7, **dadurch gekennzeichnet, dass** die freien Schenkelenden (32) des Bügels (31) in Richtung gegeneinander abgewinkelt sind, während der Bügelsteg (33) bevorzugt nach oben hin abgewinkelt von dem Rumpf absteht.

9. Tragvorrichtung nach Anspruch 8, **dadurch gekennzeichnet, dass** auf der dem Rumpf (27) zugewendeten Seite die freien Halteprofilenden mit Anschlägen od.dgl. (34) ausgestattet sind, wovon wenigstens ein Teil unter Beanspruchung einer Federwirkung der freien Halteprofilenden durch die Schenkelenden (32) überwindbar ist, wobei die am weitesten vom Bügelsteg (33) entfernten Anschläge bevorzugt dazu vorgesehen sind, die freien Schenkelenden in eingeschobener Bügellage zu arretieren, die dem Bügelsteg am nächsten angeordneten Anschläge bevorzugt jeweils paarweise vorhanden sind, um eine bestimmte Ausziehlage des Bügels in Auszieh- und Einschiebrichtung festzulegen und hierbei insbesondere die sichere Festlegung einer Tastatur od.dgl. einer Datenterminale zu gestatten.

10. Tragvorrichtung nach Anspruch 7, **dadurch gekennzeichnet, dass** die bügelstegnahen Enden der Halteprofile (29) gegen den Rumpf hin abgebogen sind zur Bildung von Endanschlägen (35), und dass in diesem Bereich bevorzugt Ausnehmungen (36) in den freien Schenkein der Führungprofile (28) vorgesehen sind, um bei entsprechend herausgezogenem Bügel ein Abkippen desselben mit dem Steg voran zu gestatten, und dass der H Bügelsteg (33) als Handgriff bzw. als Abstützorgan ausgeführt ist.

FIG.1

3

2

7

6

1

EP 0 368 827 A1

19

35

36

27

7

6

3

FIG.2

FIG.3

FIG.4

FIG.5

28

30

32

29

29

32

30

28

34

34

33

IV

IV

A

B

C E

D

EP 0 368 827 A1

FIG.7

FIG.6

FIG.8

FIG.9

FIG.10

FIG.11

FIG.12

**Europäisches Patentamt**

# EUROPÄISCHER RECHERCHENBERICHT

Nummer der Anmeldung

EP 89 85 0382

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 768 744 (LEEDS) <br> * Spalte 6, Zeilen 37-58; Spalte 8, Zeilen 24-56; Figuren 1,2,3 * | 1,3,4 | F 16 M 11/12 <br> G 06 F 1/00 |
| A | --- | 6 | |
| X | EP-A-0 184 353 (HAUSERMAN) <br> * Seite 8, Zeile 17 - Seite 9, Zeile 28; Figuren 7,8 * | 1,3 | |
| A | --- | 2,6 | |
| A | US-A-3 974 994 (PETTERSON) <br> * Spalte 2, Zeile 62 - Spalte 3, Zeile 58; Figur 1 * | 1,2,5 | |
| A | GB-A-2 096 234 (MOULDMAKING DESIGN CENTER) <br> * Seite 1, Zeile 103 - Seite 2, Zeile 58; Seite 4, Zeilen 3-9; Figuren 1,2,3,4,12,13 * | 1,2,4,5 | |
| A | US-A-1 794 726 (MITCHELL) <br> * Spalte 2, Zeilen 57-67; Spalte 3, Zeilen 99-126; Figur 2 * | 1,2,4,6 | RECHERCHIERTE SACHGEBIETE (Int. Cl.5) |
| A | DE-U-8 413 060 (BRANDENSTEIN) <br> * Seite 6, Zeile 30 - Seite 7, Zeile 13; Figuren 1-4 * | 1,7 | F 16 M <br> G 06 F |
| A | US-A-4 562 987 (LEEDS) <br> * Spalte 4, Zeile 63 - Spalte 5, Zeile 25; Figuren 1,2 * | 7,8,10 | |
| A | DE-U-8 716 686 (MANNESMANN KIENZLE) <br> --- | | |
| A | DE-U-8 512 337 (HASEKE) <br> ---        -/- | | |

Der vorliegende Recherchenbericht wurde für alle Patentansprüche erstellt

| Recherchenort | Abschlußdatum der Recherche | Prüfer |
|---|---|---|
| DEN HAAG | 08-02-1990 | BARON C. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | DE-U-8 813 958 (STEELFORM) <br> * Insgesamt * <br> ----- | 1-10 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 08-02-1990 | BARON C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................
& : Mitglied der gleichen Patentfamilie, übereinstimmendes Dokument

EPO FORM 1503 03.82 (P0403)